# FASCICULE DE BREVET EUROPEEN

(11) **EP 3 679 712 B1**
(45) Date de publication et mention de la délivrance du brevet: **24.11.2021**
(21) Numéro de dépôt: 18759347.0
(22) Date de dépôt: 03.09.2018
(51) Int. Cl.: H04L 29/12, G05B 19/418

(54) **PROCÉDÉ DE CONFIGURATION AUTOMATIQUE D'ADRESSE RÉSEAU D'UN ÉLÉMENT COMMUNICANT FAISANT PARTIE D'UN SYSTÈME DOMOTIQUE, INTERFACE RÉSEAU, ÉLÉMENT COMMUNICANT ET SYSTÈME DOMOTIQUE ASSOCIÉS**
VERFAHREN ZUR AUTOMATISCHEN KONFIGURATION DER NETZWERKADRESSE EINES ZU EINEM HEIMAUTOMATIONSSYSTEM GEHÖRENDEN KOMMUNIKATIONSELEMENTS, ZUGEHÖRIGE NETZWERKSCHNITTSTELLE, KOMMUNIZIERENDES ELEMENT UND HEIMAUTOMATIONSSYSTEM
METHOD OF AUTOMATIC CONFIGURATION OF NETWORK ADDRESS OF A COMMUNICATING ELEMENT FORMING PART OF A HOME-AUTOMATION SYSTEM, ASSOCIATED NETWORK INTERFACE, COMMUNICATING ELEMENT AND HOME-AUTOMATION SYSTEM

(30) Priorité: 04.09.2017 FR 1758144
(43) Date de publication de la demande: 15.07.2020
(73) Titulaire: Somfy Activites SA, 74300 Cluses (FR)
(72) Inventeur: FARGIER, Sylvain, 74300 Cluses (FR)
(74) Mandataire: Lavoix
(86) Numéro de dépôt international: PCT/EP2018/073613
(87) Numéro de publication internationale: WO 2019/043224

(56) Documents cités:
- EP-A1- 2 003 859
- EP-A1- 2 469 802
- YANG LIU ET AL: "EPP-IP: A flexible and automatic IP address registration mechanism", UBIQUITOUS AND FUTURE NETWORKS (ICUFN), 2012 FOURTH INTERNATIONAL CONFERENCE ON, IEEE, 4 juillet 2012 (2012-07-04), pages 515-519, XP032220125, DOI: 10.1109/ICUFN.2012.6261763 ISBN: 978-1-4673-1377-3

## Description

La présente invention concerne un procédé de configuration automatique d'adresse réseau d'un élément communicant faisant partie d'un système domotique pour un bâtiment, chaque élément communicant étant connecté dans un réseau de communication hiérarchique, et une interface réseau, un élément communicant et un système domotique pour un bâtiment associés.

L'invention se situe dans le domaine de la domotique pour bâtiments à usage commercial, industriel ou résidentiel, qu'ils soient individuels ou collectifs.

Il existe de nombreux bâtiments pourvus d'équipements électriques commandables visant à assurer des fonctions de confort et de gestion d'énergie, comme le chauffage, la ventilation et la climatisation, mais aussi de gestion de l'éclairage et de pilotage des ouvrants, tels que des stores ou des volets roulants placés devant des fenêtres du bâtiment ou encore de la sécurisation à distance par contrôle de systèmes de fermetures (portes, serrures) ou de systèmes de surveillance. Les automatismes sont les ensembles de règles qui régissent la commande des équipements électriques par un système de supervision programmable, afin d'assurer un meilleur confort des occupants du bâtiment ou encore d'optimiser la consommation d'énergie. Ces automatismes sont désignés sous le terme « Gestion Technique du Bâtiment » ou, plus généralement, sous l'expression « Building Automation Systems » en langue anglaise. Dans le résidentiel, les automatismes sont plus souvent désignés par le terme de « domotique ».

Par la suite le terme « domotique » sera utilisé pour désigner, de façon générique, les techniques d'automatisme, d'informatique, de télécommunication afin de superviser l'ensemble des équipements qui sont installés dans un bâtiment aussi bien à usage commercial, industriel que résidentiel.

Typiquement, les équipements d'un même bâtiment sont connectés à une unité de commande, qui a pour fonction de superviser ces équipements et d'en piloter le fonctionnement. Cette connexion est souvent réalisée en raccordant les équipements, par des liaisons filaires, à un bus de données commun, tel qu'un bus multipoints autorisant une connexion bidirectionnelle, par exemple de type RS485. Ce bus de données est relié à l'unité de commande, de manière à former un réseau qui autorise l'échange de données entre les équipements et l'unité de commande.

Une telle situation présente cependant des inconvénients.

D'une part, elle offre une flexibilité limitée, car toute modification postérieure à l'installation nécessite de recâbler le réseau, que ce soit pour ajouter de nouveaux équipements ou pour modifier leur répartition dans le bâtiment. Cela oblige à mettre en œuvre des travaux pouvant être longs et coûteux et nécessitant l'intervention de techniciens spécialisés.

D'autre part, cette situation connue présente des limites en termes de nombre d'équipements pouvant être accueillis sur le réseau. Par exemple, les solutions de type RS485 actuellement utilisées présentent des capacités d'adressage limitées, par exemple permettant de connecter au maximum 255 équipements sur un même bus. Cette limite est rédhibitoire lorsqu'il s'agit d'équiper des bâtiments de grande taille et/ou comprenant un grand nombre d'équipements à gérer. Or, les applications contemporaines rendent nécessaire de pouvoir gérer un grand nombre d'équipements, par exemple dans le cadre de l'internet des objets.

En outre, l'architecture de ces réseaux connus peut conduire à l'apparition de temps de latence élevés lors de la communication entre un équipement et l'unité de commande. Cela s'explique notamment par le fait que la commande est centralisée et que les informations émises par les équipements doivent remonter vers le bus pour être traitées par l'unité de contrôle. Or, pour certaines applications, un temps de latence trop élevé peut être préjudiciable au bon fonctionnement de l'équipement.

Pour remédier à ces inconvénients, il est proposé d'améliorer le système domotique en ajoutant une architecture de réseau de communication hiérarchique, permettant de gérer un grand nombre d'équipements, chaque équipement étant un élément communicant du système domotique, tout en présentant une flexibilité d'installation et d'évolution accrue.

Dans une telle architecture hiérarchique, les éléments communicants du système domotique deviennent des nœuds du réseau, ayant chacun au moins une adresse réseau permettant la communication de ces éléments communicants entre eux dans le réseau hiérarchique. Le système comporte un réseau principal de niveau de hiérarchie supérieur, et des sous-réseaux de niveaux de hiérarchie inférieurs à celui du réseau principal, connectés par des équipements réseau, passerelles ou routeurs.

Le document EP 2 469 802 A1 décrit un procédé et un système d'attribution d'adresses réseau dans des réseaux de communication basés sur le protocole IP, en particulier IPv6. Selon ce document, deux ensembles de préfixes d'adresses sont pré-alloués afin de diminuer la complexité de configuration d'adresses, ces ensembles étant gérés par un serveur.

Dans les réseaux de communication conventionnels, la configuration des adresses réseau des routeurs se fait par intervention d'un opérateur.

L'invention a pour objet de remédier à cet inconvénient, et de faciliter l'installation et la mise à jour des systèmes domotiques sans intervention d'opérateur.

A cet effet, l'invention concerne un procédé de configuration automatique d'adresse réseau d'interfaces réseau d'éléments communicants destinés à faire partie d'un système domotique pour un bâtiment et appartenant à une partie de réseau non configurée, la partie de réseau non configurée comprenant un équipement réseau de tête et au moins un élément communicant, l'adresse réseau de chaque interface réseau comprenant un préfixe de réseau, selon la revendication 1.

Avantageusement, l'invention permet une configuration automatique des adresses réseau dans le réseau de communication.

Le procédé de configuration automatique d'adresse réseau selon l'invention peut également présenter une ou plusieurs des caractéristiques des revendications dépendantes 2 à 9.

Selon un autre aspect, l'invention concerne une interface réseau pour élément communicant faisant partie d'un système domotique pour un bâtiment selon la revendication 10.

Selon un autre aspect l'invention concerne un élément communicant faisant partie d'un système domotique pour un bâtiment selon la revendication 13.

Selon un autre aspect, l'invention concerne un système domotique pour un bâtiment comprenant un réseau de communication agencé sous forme de réseau hiérarchique et une pluralité d'équipements communicants selon la revendication 14.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique d'un bâtiment comprenant un système domotique conforme à l'invention ;
- la figure 2 est une représentation schématique d'un réseau de communication hiérarchique pour connecter des équipements d'un système domotique dans un mode de réalisation ;
- la figure 3 est une représentation schématique d'une interface réseau d'un équipement domotique appartenant au réseau de communication de la figure 2 ;
- la figure 4 est une représentation schématique d'un équipement réseau appartenant au réseau de communication de la figure 2
- la figure 5 est une représentation schématique d'un exemple de structure d'adresse réseau pour identifier les éléments communicants d'un réseau de communication hiérarchique;
- la figure 6 est un synoptique des principales étapes d'un procédé de configuration automatique d'une adresse réseau mises en œuvre par une passerelle d'interconnexion selon un mode de réalisation ;
- la figure 7 est un synoptique des principales étapes d'un procédé de configuration automatique d'une adresse réseau mises en œuvre par un routeur selon un mode de réalisation ;
- la figure 8 est un synoptique des principales étapes d'un procédé de configuration automatique d'une adresse réseau mises en œuvre par un équipement domotique selon un mode de réalisation.

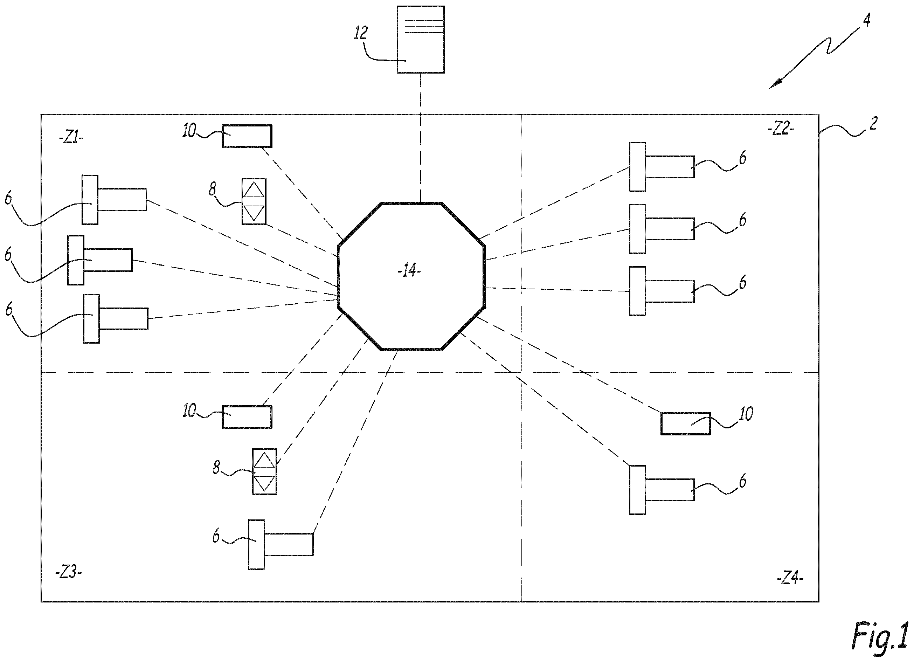

La figure 1 représente un bâtiment 2, comprenant plusieurs zones Z1, Z2, Z3, Z4. Le bâtiment 2 est équipé d'un système domotique 4 qui comporte un ensemble d'équipements domotiques répartis dans les zones du bâtiment 2, ainsi qu'un système de commande de ces équipements domotiques.

Le système domotique 4 est ici destiné à procurer des fonctions de confort et/ou de gestion d'énergie du bâtiment 2, comme le chauffage, la ventilation et la climatisation, ainsi que des fonctions de gestion de l'éclairage, de pilotage des ouvrants, tels que des stores ou des volets roulants placés devant des fenêtres du bâtiment 2 et/ou des fonctions de sécurité comme la surveillance de locaux et l'alarme.

L'ensemble d'équipements domotiques comprend des équipements domotiques tels que des appareils domotiques commandables 6, des points de commande 8 et des capteurs 10.

Le système de commande comporte notamment une unité de commande 12 programmable et un réseau de communication 14, interne au bâtiment 2, le réseau de communication 14 étant agencé pour permettre la communication des équipements domotiques du système domotique 4 avec l'unité de commande 12. Les équipements domotiques du système domotique 4 qui sont connectés à ce réseau de communication 14 sont, dans ce qui suit, dits appartenir au réseau de communication 14.

Les équipements domotiques et le système de commande sont ici raccordés à une ou plusieurs sources d'alimentation électrique, non illustrée, du bâtiment 2.

Les zones du bâtiment 2 correspondent à des portions spatiales du bâtiment 2 qui sont situées à l'intérieur et/ou l'extérieur de ce bâtiment et qui sont destinées à recevoir chacune une partie des équipements domotiques du système domotique 4.

Par exemple, des zones du bâtiment 2 correspondent à des niveaux du bâtiment 2, tels que des étages ou des sous-sols. Ces zones peuvent aussi être des pièces, des groupes de pièces du bâtiment 2, éventuellement séparées les unes des autres par des cloisons, ces pièces pouvant être réparties au sein d'un ou plusieurs niveaux du bâtiment 2. Ces zones peuvent également correspondre à des façades ou des parties de façade comme une partie de façade correspondant à un même étage.

Ces zones sont par exemple définies lors de la conception du bâtiment 2 et/ou lors de la conception et/ou l'installation du système domotique 4.

De préférence, les zones du bâtiment 2 sont distinctes les unes des autres. Toutefois, en variante, des zones du bâtiment 2 peuvent se recouper et/ou être imbriquées entre elles.

Le bâtiment 2 peut être un ensemble de bureaux, ou un bâtiment à usage d'habitation, ou un bâtiment à usage commercial ou industriel, ou toute combinaison de ces usages. Il peut notamment s'agir d'un immeuble ou d'une maison individuelle.

Ainsi, au sens de la présente description, le terme « domotique » n'est pas limité à un usage purement domestique et résidentiel.

Dans cet exemple, seules quatre zones, ici notées Z1, Z2, Z3 et Z4, sont définies en référence au bâtiment 2. Toutefois, en pratique, ce nombre peut être différent. Il est notamment adapté en fonction de la configuration du bâtiment 2 et des fonctions du système domotique 4.

Pour simplifier la figure 1, les zones Z1, Z2, Z3 et Z4 sont illustrées de façon schématique à l'intérieur d'un même étage du bâtiment 2.

De préférence, chaque appareil domotique commandable 6 comporte un actionneur pilotable au moyen d'au moins un signal de commande.

Les appareils domotiques commandables 6 sont ici illustrés de façon identique. Toutefois, ils peuvent présenter des différences entre eux et assurer des fonctions différentes au sein du système domotique 4.

Par exemple, l'actionneur de l'appareil domotique commandable 6 comprend un moteur électrique couplé avec une charge mécanique et agencé pour déplacer et/ou régler un élément du bâtiment 2.

Selon un exemple, la charge mécanique de l'appareil domotique commandable 6 est un volet occultant, tel qu'un panneau, un store ou un rideau opaque, associé à au moins une ouverture du bâtiment 2, telle qu'une fenêtre ou une baie vitrée. Le déplacement de ce volet occultant permet de réguler la quantité d'ensoleillement reçue par le bâtiment 2 au travers de cette ouverture.

Selon un autre exemple, la charge mécanique de l'appareil domotique commandable 6 est un compresseur adapté pour mettre en œuvre un cycle de détente-compression d'un fluide caloporteur au sein d'un système de réfrigération du bâtiment 2, tel qu'un climatiseur ou une pompe à chaleur, en vue de réguler la température à l'intérieur du bâtiment 2.

Selon encore un autre exemple, la charge mécanique de l'appareil domotique commandable 6 est une pompe ou un ventilateur destiné à mettre en mouvement un volume de fluide au sein du bâtiment 2, par exemple pour aspirer ou souffler de l'air au sein d'un système de ventilation, ou pour faire circuler de l'eau ou un fluide caloporteur au sein d'une conduite dédiée.

En variante, l'actionneur de l'appareil domotique commandable 6 peut piloter un dispositif de commutation électrique, afin de commander l'allumage et l'extinction d'une source lumineuse, telle qu'une batterie de lampes au néon ou à diodes électroluminescentes, au sein du bâtiment 2.

L'appareil domotique commandable 6 peut également être un éclairage, par exemple, un éclairage intérieur, extérieur ou un système de commande d'éclairage, un système d'alarme, ou encore une caméra vidéo, en particulier une caméra de vidéosurveillance.

Chaque point de commande 8 est destiné à recevoir des instructions de pilotage de la part d'un utilisateur du bâtiment 2, en vue de piloter, directement ou indirectement, un ou plusieurs des appareils domotiques commandable 6 et/ou de piloter l'unité de commande 12.

A cet effet, chaque point de commande 8 comporte ici une interface homme-machine, non illustrée, comprenant des moyens d'entrée de données, tels qu'un ou plusieurs interrupteurs et/ou un ou plusieurs boutons poussoirs et/ou un ou plusieurs boutons rotatifs et/ou un écran tactile. Le point de commande 8 peut aussi comporter une interface de connexion pour y raccorder des moyens de commande externes, par exemple un ou plusieurs interrupteurs individuels disposés autour du point de commande 8 et étant raccordés par une liaison filaire à ce dernier.

Les points de commande 8 peuvent se présenter sous la forme d'une télécommande portative associée à un récepteur fixe ou, en variante, d'un terminal de commande fixe solidarisé à un mur du bâtiment 2.

Chaque capteur 10 est destiné à convertir une ou plusieurs grandeurs physiques relatives à l'état du bâtiment 2 ou de son environnement en un ou plusieurs signaux proportionnels à cette grandeur physique. Ce signal est, par exemple, un signal électrique, un signal lumineux ou un signal radiofréquence. Ce signal peut être transmis par le capteur à destination d'au moins un équipement domotique et/ou du système de commande, par exemple, l'unité de commande 12.

Un ou plusieurs capteurs 10, peuvent être intégrés à un appareil domotique commandable 6, à un point de commande 8 ou encore à l'unité de commande 12. L'installation domotique 4 peut également comprendre un ou plusieurs capteurs indépendants.

Par exemple, les grandeurs physiques mesurées par les capteurs 10 sont, de façon non limitative, une température, par exemple une température d'un mur ou de l'air ambiant, un taux d'humidité, une valeur de luminosité, une valeur de pression de l'air ambiant, une valeur de consommation par exemple d'eau, de gaz ou d'électricité, l'état d'ouverture d'un volet roulant, la position d'un ouvrant tel une fenêtre, motorisée ou non ou encore la présence ou l'absence d'un utilisateur.

A titre d'exemple illustratif, sur la figure 1, la zone Z1 comporte trois appareils domotiques commandables 6, un point de commande 8 et un capteur 10. La zone Z2 comporte trois appareils domotiques commandables 6. La zone Z3 comporte un appareil domotique commandable 6, un point de commande 8 et un capteur 10. La zone Z4 comporte un appareil domotique commandable 6 et un capteur 10.

Chaque équipement domotique du système domotique 4, dont notamment les appareils domotiques commandables 6, les points de commande 8 et les capteurs 10, est connecté à l'unité de commande 12 par l'intermédiaire du réseau de communication 14 et comporte à cet effet une interface réseau 40 pour se connecter à ce réseau de communication 14. L'unité de commande 12 comporte également une interface réseau 40.

Par exemple, chaque appareil domotique commandable 6 reçoit des signaux de commande par l'intermédiaire du réseau de communication 14. Chaque point de commande 8 transmet les instructions de pilotage reçues par l'intermédiaire du réseau de communication 14. Chaque capteur 10 envoie les informations mesurées par l'intermédiaire du réseau de communication 14.

La communication s'effectue selon un protocole de communication donné.

Par exemple, la communication s'effectue par un échange de messages, par exemple sous forme de paquets, ces messages contenant chacun un en-tête, qui inclut une destination du message, et des données utiles, comme un ordre de commande ou une valeur de grandeur physique mesurée par un capteur.

De préférence, le protocole de communication utilisé est un protocole IP (« Internet Protocol »), par exemple le protocole IPv6. En variante, le protocole de communication est le protocole IPv4.

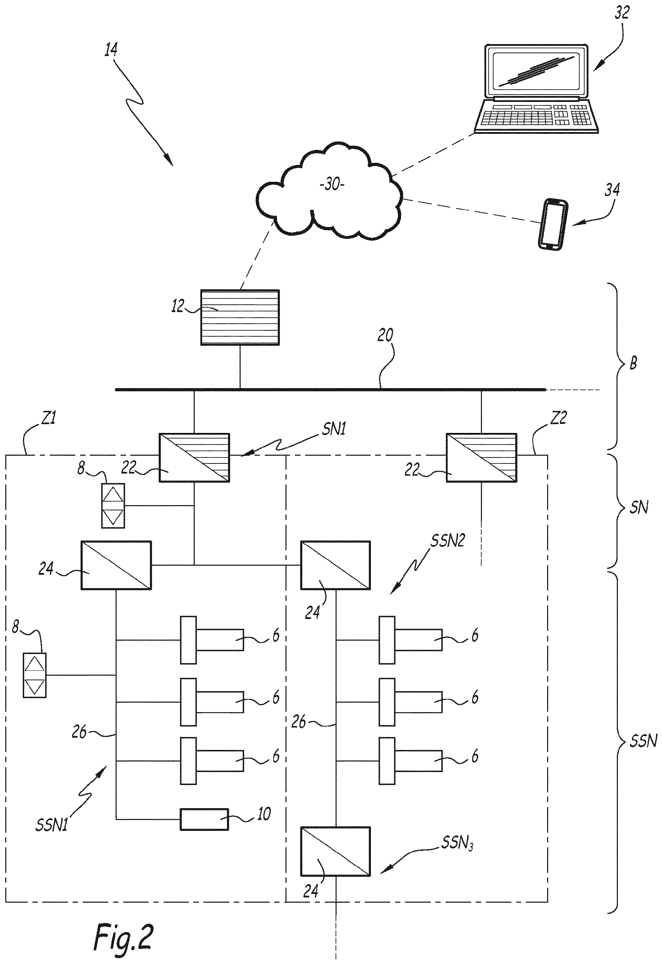

La figure 2 représente plus en détail l'exemple du réseau de communication 14 de la figure 1. Pour faciliter la lecture de cette figure 2, les équipements domotiques 6, 8, 10 associés aux zones Z3 et Z4 du bâtiment 2 n'y sont pas illustrés.

Le réseau de communication 14 est un réseau hiérarchique à plusieurs niveaux de hiérarchie, également appelé rang. Il comporte un réseau principal B, qui comprend notamment un bus de données commun, formant une liaison physique dorsale 20, aussi dite « backbone » en langue anglaise, à laquelle l'unité de commande 12 est connectée.

Par exemple, la liaison physique dorsale 20 est une liaison câblée de type Ethernet (norme IEEE 802.3), par exemple Ethernet 100Mbit/s ou supérieur.

Le réseau de communication 14 comporte également au moins un sous-réseau, noté de façon générique par la référence SN. Ce sous-réseau comporte un équipement réseau 22, 24, qui est directement connecté à la liaison dorsale 20 par l'intermédiaire d'une interface réseau 40 et qui forme la tête de ce sous-réseau SN.

Il peut s'agir d'un équipement réseau d'interconnexion, également appelé passerelle 22, destiné à interconnecter deux parties de réseaux distinctes, par exemple, de technologies différentes. Il peut également s'agir d'un routeur 24 lorsque le réseau principal B et le sous-réseau SN sont de même nature.

Le terme routeur désigne un outil matériel et logiciel formant un élément intermédiaire dans un réseau et dirigeant des données, par exemple sous forme de paquets de données, entre une et plusieurs parties du réseau. La direction donnée aux données, ou routage, est réalisée selon un ensemble de règles formant une table de routage.

Le terme passerelle désigne un routeur particulier, qui assure en plus des fonctions de routage, également une fonction de traduction des messages circulant sur le réseau, dans la mesure où les moyens physiques et/ou les protocoles diffèrent entre deux parties de réseau.

En d'autres termes, le rôle des équipements réseau routeur et passerelle est de faire transiter des paquets d'une interface réseau 40 vers une autre selon un ensemble de règles formant une table de routage.

Dans l'exemple de la figure 2, deux passerelles 22 sont connectées à la liaison dorsale 20, formant ainsi deux sous-réseaux SN1 et SN2 distincts. Seul l'un de ces deux sous-réseaux, portant la référence SN1, est décrit dans ce qui suit.

En variante, le nombre de sous-réseaux SN peut être différent.

Les sous-réseaux SN sont directement connectés au réseau principal par l'intermédiaire de passerelles, et ont un premier rang associé dans le réseau hiérarchique.

Chaque sous-réseau SN contient au moins un équipement domotique 6, 8, 10 du système domotique 4, connecté à la passerelle 22 correspondante par l'intermédiaire d'une liaison physique 26, de préférence câblée.

Le réseau de communication 14 comporte en outre des sous-sous-réseaux de rang inférieur à celui des sous-réseaux SN, et sont notés de façon générique par la référence SSN.

Chaque sous-sous-réseau SSN comporte un équipement réseau, avantageusement un routeur 24, le connectant à un sous-réseau SN ou à un sous-sous-réseau de niveau hiérarchique supérieur au sien. L'équipement réseau 22, 24, forme la tête de ce sous-sous-réseau SSN. On l'appelle également équipement réseau de tête.

En référence à l'exemple de la figure 2, si un rang « n » est associé au sous-réseau SN1, chaque sous-sous-réseau SSN1 et SSN2 a un rang « n-1 » associé, et le sous-sous-réseau SSN3 a un rang « n-2 ».

Chaque routeur 24 tête de sous-sous-réseau de rang « n-1 » est connecté à une passerelle 22 par l'intermédiaire d'une liaison physique 26, de préférence câblée.

Lorsque le réseau de communication 14 comporte plusieurs niveaux de hiérarchie, chaque équipement réseau 22, 24 tête de sous-sous-réseau de rang « n-k », avec k supérieur ou égal à 2, est connecté à un routeur 24 de rang supérieur « n-k+1 », par l'intermédiaire d'une liaison physique 26, de préférence câblée.

Dans un mode de réalisation, le réseau hiérarchique peut comprendre jusqu'à douze niveaux de hiérarchie, en incluant celui du réseau principal B.

Chaque sous-sous-réseau SSN comporte un ou plusieurs équipements domotiques 6, 8, 10, connectés au routeur 24 correspondant par l'intermédiaire d'une liaison physique 26, chaque équipement domotique étant connecté à la liaison physique 26 à l'aide de son interface réseau 40. Les équipements domotiques connectés, via une même liaison physique 26, à un même routeur 24 sont ici dits faire partie d'un même sous-réseau local.

De préférence, les sous-réseaux SN et chaque sous-sous-réseau SSN de rang inférieur à celui du sous-réseau SN sont associés chacun à une zone du bâtiment 2.

Un sous-réseau SN et/ou un sous-sous-réseau SSN est dit « associé » à une zone Z1, Z2, Z3, Z4 du bâtiment 2 lorsque les équipements domotiques 6, 8, 10 appartenant à ce sous-réseau sont eux-mêmes associés à cette zone, par exemple parce qu'ils sont physiquement localisés à l'intérieur de cette zone Z1, Z2, Z3, Z4 du bâtiment 2.

Le nombre et la structure des sous-réseaux SN et des sous-sous-réseaux SSN, ainsi que leur association aux zones du bâtiment 2, sont de préférence choisis en fonction de la configuration du bâtiment 2 et des fonctionnalités remplies par le système domotique 4.

De préférence, la liaison physique 26 qui connecte les équipements réseau 22, 24 entre eux et qui les connecte aux équipements domotiques 6, 8, 10 est un bus de données série multipoints de type RS485.

L'utilisation d'une liaison physique 26 de type RS485 présente des avantages dans ce réseau de communication 14, car elle rend possible l'utilisation de bus de données de grande longueur, par exemple jusqu'à 1km de long, sans trop dégrader la qualité du signal qui y circule. La limitation du nombre d'équipements domotiques 6, 8, 10 et/ou d'équipements réseaux 22, 24 connectés sur une même liaison physique 26 n'est pas pénalisante, grâce à l'architecture hiérarchique qui permet de connecter un nombre important de sous-réseaux.

Sur la figure 2, les passerelles 22 sont des équipements réseau d'interconnexion entre un bus de données Ethernet et un bus RS485.

De façon optionnelle, l'unité de commande 12 est adaptée pour être connectée à un réseau de données extérieur 30, tel que le réseau internet, indépendamment du réseau de communication 14.

De cette manière, l'unité de commande 12 peut communiquer avec un serveur informatique distant connecté à ce réseau extérieur 30, par exemple pour envoyer des rapports sur l'état de fonctionnement du système domotique 4 à des fins de diagnostic, ou encore pour recevoir des instructions de pilotage. L'unité de commande 12 peut également communiquer par le réseau extérieur 30 avec un ou plusieurs utilisateurs distants par exemple pourvus d'un terminal de communication comme un ordinateurs 32, un appareil de téléphonie mobile intelligent ou « *smartphones* » en langue anglaise, une tablette tactile ou tout autre équipement équivalent.

Le réseau de communication 14 est adapté pour fonctionner suivant un protocole de communication prédéfini, tel que le protocole IP, afin d'assurer une communication entre les éléments communicants du système domotique 4 qui sont connectés à ce réseau de communication 14.

Dans le mode de réalisation préféré, le protocole de communication utilisé est le protocole IPv6.

Ce protocole de communication est ici implémenté à l'aide des interfaces réseau qui équipent les divers équipements domotiques 6, 8, 10 et équipements réseau 22, 24 du système domotique 4 qui sont connectés par le réseau de communication 14, notamment grâce à leur interface réseau.

Par la suite, on désignera par le terme générique « élément communicant », les équipements réseau 22, 24 et les équipements domotiques 6, 8, 10.

Les routeurs 24 et la ou les passerelles 22 comportent des interfaces réseau spécifiques. Par exemple, ces interfaces réseau implémentent chacune une pile de protocole, c'est-à-dire un empilement de couches de protocole, chaque couche de protocole s'appuyant sur celles qui sont en dessous afin d'y apporter un supplément de fonctionnalité.

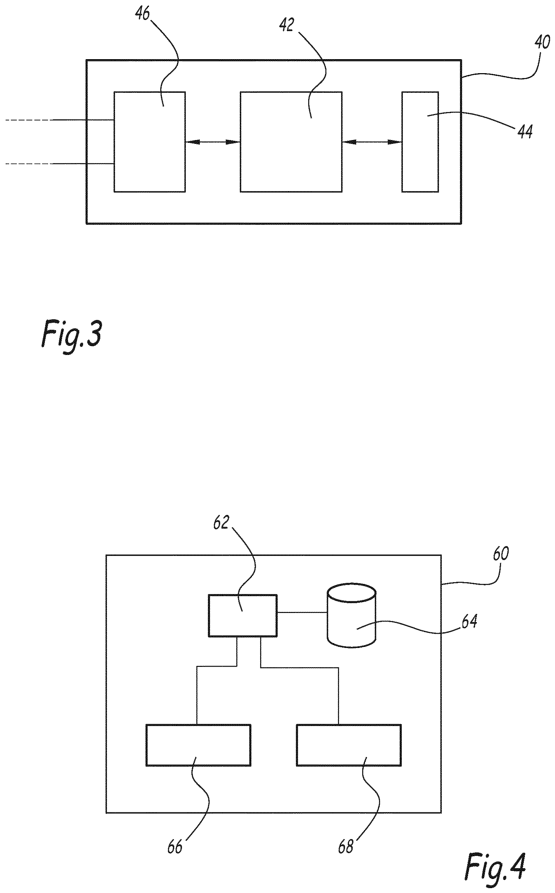

La figure 3 représente de façon schématique l'interface réseau d'un élément communicant. L'interface réseau d'un élément communicant a pour fonction de connecter cet élément communicant à un ou plusieurs réseaux de communication. Elle lui permet ainsi de communiquer avec les autres éléments communicants du ou des réseaux auquel il est connecté.

Comme illustré sur la figure 3, chaque interface réseau 40 comporte un contrôleur réseau 42, une mémoire 44 et un module d'entrée-sortie 46, aussi nommé « transceiver » en langue anglaise, le module d'entrée-sortie 46 étant ici pourvu d'un connecteur agencé pour raccorder physiquement le module d'entrée-sorties 46 à une couche physique du réseau de communication 14.

Dans cet exemple, la couche physique du réseau de communication 14 est en partie formée par les liaisons physiques 26.

Le contrôleur réseau 42 comporte un calculateur électronique, par exemple un ou plusieurs processeurs, microprocesseurs ou tout autre moyen équivalent, programmé pour assurer le traitement des données transitant par le réseau de communication 14 et par le connecteur du module d'entrée-sortie 46.

Par exemple, le contrôleur réseau 42 est programmé pour traiter automatiquement les données reçues par le module d'entrée-sortie 46 et étant destinées à l'interface réseau 40. Le traitement peut par exemple consister à extraire et décoder le contenu de paquets reçus par l'interface réseau et/ou transmettre ce contenu à l'équipement domotique auquel il est associé.

De façon complémentaire, le contrôleur réseau 42 est programmé pour préparer automatiquement les données émises par l'équipement domotique auquel il est associé, en vue de leur envoi vers un ou plusieurs équipements domotiques connectés au réseau de communication 14.

Enfin, le contrôleur réseau 42 est adapté à mettre en œuvre des instructions de code de programme permettant d'exécuter des étapes du procédé de configuration d'adresse réseau selon l'invention.

La mémoire 44 contient ici une adresse réseau 50, une partie d'adresse réseau ou au moins un identifiant, permettant d'identifier de façon unique l'interface réseau 40 sur le réseau de communication 14 et qui identifie donc l'équipement domotique correspondant sur le réseau de communication 14. L'interface réseau 40 est ici compatible avec le standard IPv6, c'est-à-dire apte à implémenter le protocole réseau IPV6.

En outre, la mémoire 44 contient avantageusement des instructions de code de programme exécutables pour assurer le fonctionnement précédemment décrit du contrôleur réseau 42.

La figure 4 représente schématiquement un équipement réseau 60 générique destiné à être utilisé dans le réseau de communication 14. L'équipement réseau 60 générique correspond par exemple à une passerelle 22 ou à un routeur 24.

Cet équipement réseau 60 comporte un dispositif programmable de calcul 62, comportant un ou plusieurs processeurs, une mémoire 64, une première interface réseau 66 et une deuxième interface réseau 68. La première interface réseau 66 est par exemple destinée à être connectée à un premier sous-sous-réseau, alors que la deuxième interface réseau 68 est destinée à être connectée à un deuxième sous-sous-réseau, de rang inférieur au premier sous-sous-réseau. Les première et deuxième interfaces réseau 66, 68 sont, par exemple, chacune physiquement similaires à l'interface 40 décrite en référence à la figure 3.

Chaque interface réseau de l'équipement réseau 60 comporte au moins une adresse réseau 50 qui sera décrite plus en détail ci-après.

Le dispositif programmable 62 est adapté à mettre en œuvre des instructions de code de programme permettant d'exécuter des étapes du procédé de configuration d'adresse réseau selon l'invention. Ces instructions de code de programme peuvent, par exemple, être stockées dans la mémoire 64 de l'équipement réseau.

Le dispositif programmable 62 est en outre programmé pour assurer un routage des paquets de données arrivant depuis la partie de réseau associée à l'une ou l'autre des première et deuxième interfaces réseau 66, 68 vers une partie du réseau de communication 14 connectée à l'autre interface réseau 66, 68, en fonction de la destination de ces paquets de données. A cet effet, l'équipement 60 comporte ici une table de routage, par exemple enregistrée au sein de la mémoire 64. Cette table de routage contient la liste de toutes les routes connues du réseau de communication 14.

Par exemple, si on se réfère au mode de réalisation de la figure 2, dans le cas d'un routeur 24, les première et deuxième interfaces réseau 66, 68 sont ici compatibles avec les bus de données de type RS485.

Une passerelle 22 présente un fonctionnement semblable à celui de équipement réseau 60 décrit ci-dessus, sauf qu'une des deux interfaces réseau 66, 68 est connectée avec la liaison dorsale 20.

En variante, un équipement réseau 60 a une interface réseau 66 destinée à une connexion amont (en anglais « uplink ») avec un équipement réseau de niveau de hiérarchie supérieur à celui de l'équipement réseau 60, et plusieurs interfaces 68 destinés aux connexions aval (en anglais « downlink ») avec des équipements réseau de niveau de hiérarchie inférieur à celui de l'équipement réseau 60.

Le protocole de communication utilisé par le réseau de communication 14 permet d'assurer l'adressage des messages échangés entre les éléments du système domotique 4.

Par exemple, lorsqu'un premier élément communicant du système domotique 4, tel qu'un point de commande 8, doit envoyer des données à destination d'un deuxième élément communicant du système domotique 4, tel qu'un appareil domotique commandable 6, alors le premier élément communicant (appelé source) génère un message contenant les données à envoyer et contenant l'adresse du deuxième élément communicant (appelé destinataire). Le message est ainsi routé au sein du réseau de communication 14 de l'élément communicant source jusqu'à atteindre le ou les éléments communicants destinataires.

Plus précisément, un message échangé entre des éléments communicants du réseau appartenant au même sous-réseau local ou au même sous-sous-réseau local transite par l'intermédiaire de la liaison physique 26 à laquelle sont connectés les éléments communicants du réseau. Un message échangé entre des éléments communicants du réseau n'appartenant pas au même sous-réseau local ou au même sous-sous-réseau local est routé au moyen du routeur 24 tête du sous-réseau local auquel est connecté l'élément communicant source, qui le redirige vers le sous-réseau auquel est connecté chaque élément communicant destinataire, éventuellement par l'intermédiaire des équipements réseau 22 et de la liaison dorsale 20.

Chaque équipement réseau 22, 24 et chaque élément communicant 6, 8, 10 du réseau de communication 14 possède au moins une interface réseau 40 ayant une adresse réseau 50 unique.

Par la suite, on assimilera l'adresse réseau 50 de l'interface réseau 40 d'un élément communicant à l'adresse réseau 50 de cet élément communicant.

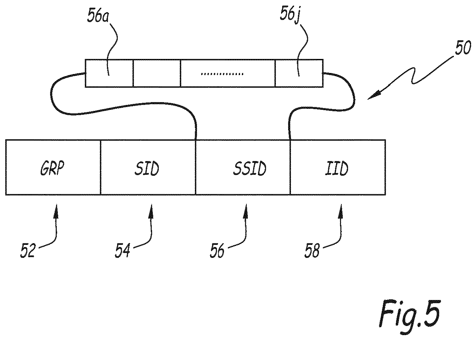

La figure 5 représente de façon schématique un exemple d'adresse réseau de type point à point *(« unicast »* en langue anglaise) permettant de définir de manière unique un élément communicant.

L'adresse réseau 50 comporte plusieurs champs d'adressage référencés respectivement 52, 54, 56 et 58, les champs d'adressage correspondant à des niveaux de hiérarchie différents et successifs du réseau de communication 14 hiérarchique de communication.

Le champ d'adressage référencé 52, associé au niveau de hiérarchie le plus élevé du réseau de communication 14, contient un préfixe de site GRP pour « Global Routing Prefix », qui identifie le réseau de communication 14 dans son ensemble. Typiquement, un préfixe de site GRP unique est attribué au système domotique 4 d'un bâtiment 2.

Le préfixe de site GRP est préconfiguré de façon manuelle dans tous les équipements réseau 22, 24 destinés à être connectés sur la liaison dorsale 20. Il peut être enregistré dans une mémoire 64 de l'équipement réseau 22, 24, par exemple, une mémoire 44 de son interface réseau 40. Le préfixe de site GRP ne peut être modifié que de façon manuelle. Il correspond au niveau de hiérarchie le plus haut dans le réseau de communication 14.

Le champ d'adressage référencé 54 contient un identifiant de sous-réseau SID pour « Subnet IDentifier », qui identifie le sous-réseau SN de rang n, n étant un entier non nul, auquel appartient l'élément communicant considéré. A chaque sous-réseau SN connecté à la liaison dorsale 20 correspond un identifiant de sous-réseau SID différent.

Le champ d'adressage référencé 56 contient un identifiant de sous-sous-réseau SSID pour «Sub Subnet IDentifier », qui identifie le sous-sous-réseau SSN de rang inférieur à n auquel appartient l'élément communicant considéré.

Enfin, le champ d'adressage 58 contient un identifiant d'interface IID pour « Interface IDentifier », correspondant à l'identifiant unique de l'interface réseau 40 de l'élément communicant considéré. Dans un mode de réalisation il s'agit de l'adresse MAC qui identifie de manière unique chaque interface réseau 40 d'un élément communicant. Cet identifiant est attribué à l'interface réseau 40 lors de sa fabrication. Il peut par exemple être stocké dans une mémoire 44 de l'interface réseau 40. Suivant un autre mode de réalisation le champ d'adressage 58 correspondant à l'identifiant d'interface IID peut être renseigné lors de la fabrication de l'interface réseau.

L'adresse réseau 50 est constituée d'un préfixe de réseau, comprenant le préfixe de site GRP, l'identifiant de sous-réseau SID et l'identifiant de sous-sous-réseau SSID, et de l'adresse de machine comprenant l'identifiant d'interface IID.

Lorsque le protocole de communication utilisé est le protocole IPv6, l'adresse réseau 50 d'un élément communicant 6, 8, 10, 22, 24 comporte au total 128 bits, soit 16 octets. Par exemple, le nombre d'octets alloué à chacun des champs d'adressage 52, 54, 56 et 58 est respectivement de 48 bits, 16 bits, 40 bits et 24 bits. De plus, le champ d'adressage 56 correspondant aux sous-sous-réseaux est typiquement découpé en sous-champs d'adressage 56a à 56j, permettant d'identifier plusieurs couches de sous-sous-réseaux. Chaque sous-champ d'adressage correspond à un niveau de hiérarchie différent du sous-sous-réseau SSN. Suivant un mode de mise en œuvre, le champ d'adressage 56 correspondant aux sous-sous-réseaux peut comprendre dix sous-champs d'adressage.

Lorsque le protocole de communication utilisé est le protocole IPv4, l'adresse réseau comporte au total 32 bits, soit 4 octets.

Une adresse réseau 50 est complètement configurée lorsque les différents champs d'adressage 52, 54, 56 et 58 sont renseignés, en fonction du niveau de hiérarchie du sous-réseau auquel appartient l'élément communicant considéré.

Cependant, la configuration complète d'une adresse réseau 50 nécessite de connaître la topologie du réseau de communication, et, pour un nouvel élément communicant à connecter en tant que nœud du réseau, de connaître les adresses des éléments communicants de niveau de hiérarchie supérieur à celui de l'élément communicant considéré dans le réseau hiérarchique afin de renseigner son préfixe de réseau.

Dans une phase d'installation d'un système domotique, certains équipements réseau 22, 24 ne sont pas connectés à la liaison dorsale 20.

Avant la connexion d'un équipement réseau 22, 24 à la liaison dorsale 20, les éléments communicants déjà connectés à cet équipement réseau peuvent communiquer entre eux dans un mode de communication appelé non configuré. La communication en mode non configuré est effectuée soit entre les éléments communicants connectés à une même liaison physique 26, soit avec des éléments communicant connectés à une liaison physique 26 appartenant à un sous-réseau de rang inférieur à celui auquel appartient l'élément communicant considéré en utilisant une communication de type multidiffusion *(« multicast* » en anglais).

Lorsqu'une partie de réseau non configurée est connectée au réseau de communication 14 configuré, l'invention propose la mise en œuvre d'un procédé de configuration automatique d'adresse réseau permettant de passer du mode de communication non configuré au mode de communication configuré, dans lequel tout élément communicant a une adresse réseau complètement configurée.

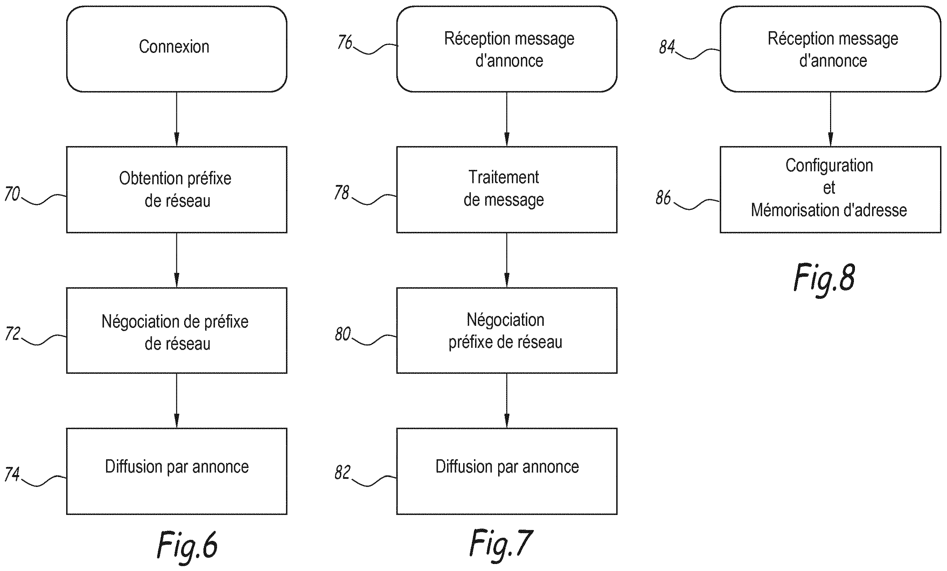

La figure 6 est un organigramme des principales étapes d'un procédé de configuration automatique d'adresse réseau 50 d'interfaces réseau 40 d'éléments communicants 6, 8,10, 22, 24 destinés à faire partie d'un système domotique 4 pour un bâtiment 2. Ces éléments communicants appartiennent à une partie de réseau de communication non configurée.

Un élément communicant est dit « configuré » lorsque l'adresse 50 de son interface réseau 40 est complète, c'est-à-dire que chacun de ses champs d'adressage 52, 54, 56, 58 a été renseigné.

Il est à noter que selon le niveau de hiérarchie du sous-réseau auquel appartient l'élément communicant, plusieurs champs d'adressage 54, 56 appartenant au préfixe de réseau de l'adresse réseau de cet élément communicant peuvent prendre une valeur nulle.

Un élément communicant est dit « non configuré » lorsqu'au moins un champ d'adressage de l'adresse réseau de son interface réseau 40 n'a pas été renseigné. Dans cet état, l'interface réseau 40 de l'élément communicant non configuré est dans l'attente d'un message en provenance d'un équipement réseau auquel il est connecté pour se configurer.

Par analogie, un réseau de communication 14, est dit «configuré» lorsque chacun des éléments communicants connecté à ce réseau de communication est configuré. Un sous-réseau SN configuré ou un sous-sous-réseau SSN configuré peut être défini de façon analogue.

La partie de réseau non configurée peut être destinée à être un sous-réseau SN et/ou au moins un sous-sous-réseau SSN du réseau de communication sur lequel elle va être connectée. La partie de réseau non configurée comprend un équipement réseau 22, 24 dit équipement réseau de tête et au moins un élément communicant 6, 8, 10, 22, 24. L'équipement réseau 22, 24 dit de tête correspond à l'équipement réseau par lequel la partie de réseau non configurée est connectée au réseau de communication 14 déjà configuré.

Dans un mode de réalisation, le protocole de communication utilisé est le protocole IPv6.

Le procédé de configuration est mis en œuvre automatiquement suite au branchement de l'équipement réseau de tête dans le réseau de communication 14 déjà configuré. L'équipement réseau de tête peut être une passerelle 22 ou routeur 24 suivant la nature du segment de réseau sur lequel il se connecte.

Le procédé comprend principalement des étapes de négociation du préfixe de réseau associé à l'interface réseau 40 de l'équipement réseau 22, 24 de tête et de propagation de ce préfixe de réseau à l'ensemble des éléments communicants 6, 8, 10, 22, 24 appartenant à la partie de réseau non configurée, en vue de la configuration automatique des adresses réseau 50 de l'ensemble de leurs interfaces réseau 40.

De façon avantageuse, les différentes étapes successives de négociation de préfixe de réseau et de propagation des préfixes de réseau négociés permettent de configurer automatiquement l'ensemble de la partie de réseau.

A la connexion de l'équipement réseau de tête 22, 24 au réseau de communication 14, le contrôleur réseau 42 de l'interface réseau de l'équipement réseau de tête met en œuvre une étape 72 de négociation de son préfixe de réseau. Pour cela le contrôleur réseau 42 commence par obtenir 70 le préfixe de réseau de l'emplacement sur lequel l'équipement réseau de tête se connecte dans le réseau.

Lorsque l'équipement réseau de tête, se connecte sur la liaison dorsale 20, le préfixe de réseau se limite au préfixe de site GRP, les autres champs d'adressage prenant la valeur nulle. Le contrôleur réseau 42 interroge une zone mémoire 44, 64 de l'équipement de tête 22, 24 afin d'obtenir cet identifiant préenregistré, par exemple, par un installateur. Une fois obtenu, l'identifiant GRP est attribué au champ d'adressage 52 correspondant pour former l'adresse de réseau.

Lorsque la partie de réseau non configurée se connecte, via un équipement réseau de tête, au niveau d'un sous-réseau SN, respectivement un sous-sous-réseau SSN, le préfixe de réseau comporte le préfixe de site GRP et l'identifiant de sous-réseau SID respectivement le préfixe de site GRP, l'identifiant de sous-réseau SID et l'identifiant de sous-sous-réseau SSID. Comme énoncé précédemment, une valeur nulle est affectée aux autres champs d'adressage. Lors d'une telle connexion, les équipements réseau ont une procédure différente pour obtenir le préfixe de réseau, ils attendent une annonce par diffusion d'un équipement réseau sur une de leurs interfaces.

Ensuite, le contrôleur réseau 42 d'une interface réseau assurant la connexion aval de l'équipement réseau de tête met en œuvre une étape 72 de négociation d'identifiant de sous-réseau SID ou de sous-sous-réseau SSID. Par exemple, la procédure mise en œuvre, lors de cette étape de négociation du préfixe de réseau, est similaire à la procédure d'auto-configuration décrite dans le document « IPv6 Stateless Address Configuration » (RFC4862).

Lors de cette étape de négociation 72, le contrôleur réseau 42 génère un identifiant de sous-réseau SID ou de sous-sous-réseau SSID. L'identifiant peut être généré de façon aléatoire ou suivant un ordre prédéfini. L'interface réseau met en œuvre des mécanismes de vérification de l'unicité, dans le réseau de communication 14, du préfixe de réseau formé avec l'identifiant relatif à l'emplacement où la partie de réseau non configurée se connecte dans le réseau et l'identifiant SID, SSID généré localement.

La vérification d'unicité comprend une sollicitation des autres équipements réseau 60, de même rang, du réseau de communication 14, permettant ainsi de vérifier si l'identifiant de sous-réseau SID ou de sous-sous-réseau SSID généré est déjà utilisé par un équipement réseau 60 de même niveau hiérarchique dont l'adresse a été préalablement configurée.

Si la vérification d'unicité est négative, un autre identifiant de sous-réseau SID ou de sous-sous-réseau SSID est généré localement, et une nouvelle vérification de l'unicité de l'identifiant généré est mise en œuvre jusqu'à l'obtention d'un identifiant de sous-réseau SID ou de sous-sous-réseau SSID disponible dans le réseau de communication 14, c'est-à-dire, un identifiant qui n'est pas déjà utilisé par un autre équipement réseau 22, 24 de même rang.

Le contrôleur réseau 42 sauvegarde, dans une mémoire de l'interface réseau, son identifiant de sous-réseau SID ou de sous-sous-réseau SSID à l'issue de la mise en œuvre de l'étape de négociation 72 d'identifiant. Les champs d'adressage 54, 56 correspondants à l'identifiant obtenu et à l'identifiant généré du préfixe de réseau de l'interface réseau de l'équipement de tête sont ainsi complétés. Ces identifiants SID, SSID sont associés à l'identifiant d'interface IID de l'interface réseau 40 pour former son adresse réseau 50 complète qui peut être sauvegardée dans une mémoire de l'interface réseau.

Les étapes 70 à 72 précédemment citées permettent d'effectuer l'attribution d'un préfixe de réseau configuré à l'interface réseau de l'équipement réseau de tête de la partie de réseau non configurée.

Ces étapes sont suivies d'une étape 74 de diffusion par annonce (en anglais « advertisement »). Au cours de cette étape le contrôleur réseau 42 de l'équipement de tête diffuse le préfixe de réseau qui a été attribué à son l'interface réseau 40 vers les éléments communicants directement connectés à l'équipement de tête.

On appelle élément communicant directement connecté à un premier équipement réseau, tout élément communicant 6, 8, 10, 22, 24 appartenant à la liaison physique 26 connectée au premier équipement réseau. Lorsque l'élément communicant est un équipement réseau, il s'agit d'un équipement réseau de rang directement inférieur, c'est-à-dire d'un niveau hiérarchique égal à celui du premier équipement réseau moins une unité.

En particulier, le préfixe de réseau utilisé par l'équipement de tête 22, 24 est transmis aux équipements réseau de rang directement inférieur. Le mécanisme de diffusion par annonce est effectué par une annonce de l'équipement réseau (en anglais « router advertisement » RFC4861).

La diffusion par annonce est effectuée de manière répétitive ou en réponse à une sollicitation (en anglais « router sollicitation »).

Suivant un mode de mise en œuvre, les équipements réseau de type RS485 peuvent envoyer une annonce non-sollicitée avec une période doublée à chaque annonce, la période initiale étant de 4 secondes et la période maximale étant de 32768 secondes.

De plus, après la configuration de son adresse réseau, l'interface réseau 40 de l'équipement réseau de tête doit répondre à chaque sollicitation reçue d'un autre élément communicant du réseau de communication 14, pour permettre la configuration automatique de l'adresse de l'interface réseau de cet autre élément communicant.

Le message de diffusion par annonce est reçu par chaque équipement réseau 22, 24 connecté à la liaison physique 26 reliée à l'interface réseau ayant émis le message de diffusion. A la réception d'un message de diffusion par annonce, le contrôleur réseau 42 de chaque équipement réseau 22, 24 met en œuvre les étapes 76 à 82 décrites ci-après en référence à la figure 7.

Plus généralement, chaque équipement réseau 22, 24, tête d'un sous-réseau, ou d'un sous-sous-réseau, de rang « n-k », k étant un entier non nul, reçoit un message de diffusion annonçant le préfixe de réseau de l'équipement réseau 22, 24 de rang « n-k+1 », qui est le rang immédiatement supérieur au sien, venant de se configurer et auquel il est directement connecté.

Les étapes référencées 76 à 82 sont mises en œuvre par un équipement réseau afin de configurer le préfixe de réseau de ses interfaces réseau de rang inférieur et le propager aux éléments communicants 6, 8, 10, 22, 24 qui lui sont directement connectés.

Dans une partie de réseau non configurée, on appelle un équipement réseau, tête d'un sous-réseau, l'équipement réseau auquel est connecté le sous-réseau considéré. On définit de façon analogue un équipement réseau, tête d'un sous-sous-réseau.

Lors d'une étape de réception 76 d'un message de diffusion par annonce, un équipement réseau de rang « n-k », k étant un entier non nul, appelé équipement réseau aval, reçoit un message de diffusion par annonce d'un préfixe de réseau d'un équipement réseau de rang « n-k+1 », appelé équipement réseau amont.

L'étape 76 de réception est suivie d'une étape 78 de traitement du message reçu, comportant notamment l'extraction du préfixe de réseau reçu, appelé ici préfixe de réseau amont. Suivant un mode de mise en œuvre, le contrôleur réseau 42 peut comparer le préfixe de réseau reçu avec un préfixe de réseau par défaut préalablement mémorisé dans une mémoire de l'interface réseau de l'équipement réseau.

Le préfixe de réseau reçu par l'interface réseau est reconnu comme préfixe de réseau amont, provenant d'un équipement réseau de rang plus élevé que celui de l'équipement réseau considéré, dans le réseau hiérarchique. De même, l'interface réseau 40 sur laquelle a été reçu ce préfixe de réseau est reconnue comme étant l'interface réseau 40 assurant la connexion amont.

Lors de l'étape 78 de traitement du message reçu, le contrôleur réseau 42 détermine quels sous-champs d'adressage 56a à 56j parmi les champs d'adressage il devra négocier pour identifier les réseaux de rang inférieur qu'il administrera. Il s'agit du premier sous-champ d'adressage 56a à 56j qui est renseigné avec une valeur nulle dans le préfixe de réseau amont.

L'étape 78 de traitement du message reçu est suivie d'une étape 80 de négociation d'identifiant de sous-sous-réseau SSID, analogue à l'étape de négociation d'identifiant 72 décrite ci-dessus, et qui a pour objet d'obtenir un identifiant de sous-sous-réseau disponible dans le réseau de communication 14.

Une fois l'unicité de l'identifiant de sous-réseau SSID vérifiée, le contrôleur réseau 42 complète le préfixe de réseau de son interface réseau en ajoutant l'identifiant de sous-réseau SSID généré. Le contrôleur réseau forme également l'adresse réseau 50 de son interface réseau en ajoutant au préfixe de réseau l'identifiant d'interface IID qui lui a été affecté. L'adresse réseau 50 complète est ensuite sauvegardée dans une mémoire 44, 64 de l'interface réseau 40.

Le préfixe de réseau de l'interface réseau de l'équipement réseau configuré est ensuite diffusé par annonce, lors de l'étape de diffusion 82, aux éléments communicants directement connectés.

Ainsi, lorsque la partie de réseau non configurée comporte plusieurs niveaux de hiérarchie, l'interface réseau d'un équipement réseau 22, 24, tête d'un sous-sous-réseau SSN de rang « n-1 », diffuse son adresse réseau aux équipements réseau de rang « n-2 », chacun de ces équipements réseau de rang inférieur mettant ensuite en œuvre les étapes 76 à 82 décrits ci-dessus.

Par conséquent, la configuration des adresses réseau se fait en cascade, par propagation descendante dans les niveaux de hiérarchie du réseau.

Chaque élément communicant correspondant à un équipement domotique 6, 8, 10 met également en œuvre des étapes de configuration de l'adresse réseau de son interface réseau, comme expliqué ci-après en référence à la figure 8.

L'interface réseau 40 de chaque équipement 6, 8, 10 reçoit un message de diffusion par annonce émis par l'équipement de tête du sous-réseau SN ou du sous-sous-réseau SSN local auquel il appartient lors d'une étape 84.

Lors d'une étape de traitement 86, le contrôleur réseau 42 de l'équipement domotique considéré extrait du message reçu le préfixe de réseau de l'interface réseau de l'équipement réseau, comportant les valeurs à attribuer aux champs d'adressage 52, 54, 56 et forme son adresse réseau 50 complète en ajoutant son identifiant IID.

Ainsi, après la connexion de l'équipement réseau de tête d'une partie de réseau non configurée, toutes les adresses réseau de tous les éléments communicants connectés dans cette partie de réseau non configurée sont configurées de proche en proche, dans l'ordre descendant des niveaux de hiérarchie successifs, ce qui permet d'effectuer des communications selon le protocole de communication prédéterminé, en mode configuré.

De façon avantageuse, grâce à la forme hiérarchique du réseau de communication 14 et à la forme particulière de l'adresse réseau 50 de chaque élément communicant, chaque équipement réseau en cours de configuration sait quel champ ou sous-champ d'adressage il doit négocier et où il en est dans la configuration de la partie de réseau à configurer. Ceci est notamment dû à la structure du champ d'adressage 56 correspondant à l'identifiant SSID de sous-sous-réseau SSN qui est divisé en une pluralité de sous-champ d'adressage 56a à 56j correspondant à la topologie des sous-sous-réseaux SSN du réseau de communication 14.

## Revendications

1. Procédé de configuration automatique d'adresse réseau (50) d'interfaces réseau (40) d'éléments communicants (6, 8, 10, 22, 24) destinés à faire partie d'un système domotique (4) pour un bâtiment (2) et appartenant à une partie de réseau non configurée,
la partie de réseau non configurée comprenant un équipement réseau (22, 24) de tête et au moins un élément communicant (6, 8, 10, 22, 24),
l'adresse réseau (50) de chaque interface réseau (40) comprenant un préfixe de réseau,
le procédé étant mis en œuvre suite à la connexion de l'équipement réseau (22, 24) de tête à un réseau de communication (14) configuré faisant partie du système domotique (4) pour bâtiment (2), le réseau de communication (14) étant agencé sous forme de réseau hiérarchique comprenant au moins deux niveaux de hiérarchie successifs, le procédé comprenant des étapes de :
- négociation (72, 80) du préfixe de réseau de l'interface réseau (40) de l'équipement réseau (22, 24) de tête,
- propagation (74, 82) dudit préfixe de réseau aux éléments communicants (6, 8, 10, 22, 24) appartenant à la partie de réseau en vue de la configuration automatique des adresses réseau (50) de l'ensemble des interfaces réseau (40) desdits éléments communicants, la propagation comprenant l'émission, par l'interface réseau (40) de l'équipement réseau (22, 24) de tête et en direction d'au moins un premier équipement réseau (22, 24) directement connecté à l'équipement réseau (22, 24) de tête, du préfixe de réseau de l'adresse réseau de l'interface réseau (40) de l'équipement réseau de tête, le procédé comprenant en outre des étapes de :
- négociation (80) d'un préfixe de réseau de l'interface réseau du premier équipement réseau (22, 24) à partir du préfixe de réseau reçu de l'équipement réseau de tête,
- diffusion (82) par annonce du préfixe de réseau de l'interface réseau du premier équipement réseau, à destination des éléments communicants (6, 8, 10, 22, 24) directement connectés au premier équipement réseau,
- si l'élément communicant (6, 8, 10, 22, 24) de destination est un équipement réseau (22, 24), les étapes de négociation (80) et de diffusion (82) par annonce sont répétées en cascade pour chaque équipement réseau de niveau hiérarchique successif, dans un ordre descendant.

2. Procédé selon la revendication 1 dans lequel l'adresse réseau de chaque interface réseau (40) comprend une pluralité de champs d'adressage (52, 54, 56, 58), chacun des champs d'adressage de l'adresse réseau d'une interface réseau est relatif à au moins un niveau de hiérarchie du réseau de communication, et dans lequel l'étape de négociation (72, 80) comprend des étapes de :
- génération d'un premier identifiant (SID, SSID),
- formation d'un préfixe réseau par attribution du premier identifiant à un premier champ d'adressage (54, 56) de l'adresse réseau (50),
- vérification d'unicité, dans le réseau de communication (14) configuré, dudit préfixe de réseau formé avec le premier identifiant généré,
et en cas de vérification négative, répétition des étapes de génération d'un premier identifiant (SID, SSID), formation d'un préfixe réseau et vérification d'unicité du préfixe de réseau.

3. Procédé selon la revendication 2 dans lequel le réseau de communication (14) comprend un réseau principal (B), l'équipement réseau (22, 24) de tête étant connecté au réseau principal (B) et dans lequel l'étape de négociation comprend une étape d'obtention (70) d'un deuxième identifiant (GRP) associé au réseau principal et une attribution du deuxième identifiant à un deuxième champ d'adressage (52) de l'adresse réseau (50).

4. Procédé selon la revendication 2 dans lequel le réseau de communication (14) comprend un réseau principal (B) et au moins un sous réseau (SN) connecté au réseau principal (B) par l'intermédiaire d'un équipement réseau (22, 24) et dans lequel l'équipement réseau (22, 24) de tête est connecté audit sous-réseau (SN), et
dans lequel l'étape de négociation comprend une étape d'obtention (70, 78) d'un deuxième identifiant (SID) associé au sous-réseau (SN) et attribution du deuxième identifiant à un deuxième champ d'adressage (54) de l'adresse réseau (50).

5. Procédé selon la revendication 2 dans lequel le réseau de communication (14) comprend un réseau principal (B), au moins un sous-réseau (SN) connecté au réseau principal (B) par l'intermédiaire d'un premier équipement réseau (22, 24) et au moins un sous-sous-réseau (SSN) connecté au sous-réseau (SN) par l'intermédiaire d'un deuxième équipement réseau (22, 24), et dans lequel l'équipement réseau (22, 24) de tête est connecté à un dit sous-sous-réseau (SSN) et
dans lequel l'étape de négociation comprend une étape d'obtention d'un deuxième identifiant (SSID) associé au sous-sous-réseau (SN) et d'attribution du deuxième identifiant à un deuxième champ d'adressage (56) de l'adresse réseau (50).

6. Procédé selon l'une quelconque des revendications précédentes dans lequel un identifiant d'interface (IID) a été attribué à l'interface réseau (40) de l'équipement réseau (22, 24) de tête et
dans lequel le procédé de configuration automatique d'adresse réseau de l'équipement réseau (22, 24) de tête comprend en outre une étape d'attribution de l'identifiant d'interface (IID) de l'interface réseau de l'équipement de tête à un troisième champ d'adressage (58) de l'adresse réseau (50).

7. Procédé selon l'une quelconque des revendications 1 à 6 dans lequel le préfixe de réseau de l'interface réseau (40) de l'équipement réseau de tête est transmis dans un message de diffusion, et dans lequel la négociation (76, 78, 80) d'un préfixe réseau de l'interface réseau dudit premier équipement réseau comprend des étapes de :
- réception (76), du préfixe de réseau de l'équipement réseau de tête par l'interface réseau (40) du premier équipement réseau (22, 24),
- génération du préfixe de réseau de l'interface réseau du premier équipement réseau (22, 24) à partir du préfixe de réseau reçu.

8. Procédé selon la revendication précédente dans lequel l'étape de négociation (78, 80) du préfixe de réseau comprend en outre des étapes de :
- génération d'un identifiant (SSID) associé à un sous-sous-réseau (SSN),
- vérification de l'unicité, dans le réseau de communication (14), du préfixe de réseau formé avec le préfixe de réseau reçu et l'identifiant (SSID) généré,
en cas de vérification négative, les étapes de génération d'identifiant et de vérification étant répétées.

9. Procédé selon l'une quelconque des revendications précédentes dans lequel l'étape de propagation du préfixe de réseau comprend l'émission d'un message de diffusion par l'interface réseau (40) de l'équipement réseau (22, 24) en direction d'au moins un équipement domotique (6, 8, 10) directement connecté à l'équipement réseau (22, 24), un identifiant d'interface (IID) ayant été attribué à l'interface réseau de l'équipement domotique, le message de diffusion comprenant le préfixe de réseau de l'équipement réseau de tête,
le procédé comprenant des étapes de :
- réception (84), du préfixe de réseau par l'interface réseau (40) de l'équipement domotique (6, 8, 10),
- extraction (86) de champs d'adressage (52, 54, 56) du préfixe de réseau,
- attribution d'une adresse réseau à l'interface réseau de l'équipement domotique (6, 8, 10) partir de champs d'adressage (52, 54, 56) extraits et de l'identifiant d'interface (IID) de l'équipement domotique.

10. Interface réseau (40) pour élément communicant (6, 8, 10, 22, 24) faisant partie d'un système domotique pour un bâtiment **caractérisé en ce qu'**il comprend un contrôleur réseau (42) configuré pour mettre en œuvre le procédé de configuration automatique selon l'une quelconque des revendications précédentes.

11. Interface réseau (40) selon la revendication précédente comprenant une mémoire (44) configurée pour sauvegarder l'adresse réseau (50) de l'interface réseau (40), dans laquelle l'adresse réseau est découpée en une pluralité de champs d'adressage (52, 54, 56, 58) chaque champ d'adressage correspondant à des niveaux de hiérarchie différents et successifs du réseau de communication (14).

12. Interface réseau (40) selon la revendication précédente, dans laquelle l'adresse réseau comprend un champ d'adressage (56) correspondant à un identifiant (SSID) de sous-sous-réseau du réseau de communication, divisé en une pluralité de sous-champs d'adressage, chaque sous-champ d'adressage correspondant à des niveaux de hiérarchie différents et successifs dudit sous-sous-réseau (SSN).

13. Elément communicant (6, 8, 10, 22, 24) faisant partie d'un système domotique pour un bâtiment **caractérisé en ce qu'**il comprend une interface réseau selon une des revendications 10 à 12.

14. Système domotique pour un bâtiment **caractérisé en ce que** le système comprend un réseau de communication (14) agencé sous forme de réseau hiérarchique et une pluralité d'éléments communicants (6, 8, 10, 22, 24) selon la revendication précédente, connectés au réseau de communication (14).

## Patentansprüche

1. Verfahren zur automatischen Konfiguration der Netzwerkadresse (50) von Netzwerkschnittstellen (40) von Kommunikationselementen (6, 8, 10, 22, 24), die dazu bestimmt sind, Teil eines Heimautomationssystem (4) für ein Gebäude (2) zu sein und die zu einem nicht konfigurierten Netzwerkteil gehören,
wobei das nicht konfigurierte Netzwerkteil eine Kopf-Netzwerkausrüstung (22, 24) und wenigstens ein Kommunikationselement (6, 8, 10, 22, 24) umfasst,
wobei die Netzwerkadresse (50) jeder Netzwerkschnittstelle (40) ein Netzwerkpräfix umfasst,
wobei das Verfahren im Anschluss an die Verbindung der Kopf-Netzwerkausrüstung (22, 24) mit einem konfigurierten Kommunikationsnetzwerk (14), das Teil des Heimautomationssystems (4) für ein Gebäude (2) ist, ausgeführt wird, wobei das Kommunikationsnetzwerk (14) in Form eines hierarchischen Netzwerks vorgesehen ist, das wenigstens zwei aufeinander folgende Hierarchieebenen umfasst, wobei das Verfahren die folgenden Schritte umfasst:
- Aushandeln (72, 80) des Netzwerkpräfixes der Netzwerkschnittstelle (40) der Kopf-Netzwerkausrüstung (22, 24),
- Übertragen (74, 82) des Netzwerkpräfixes an die zu dem Netzwerkteil gehörenden Kommunikationselemente (6, 8, 10, 22, 24) für die automatische Konfiguration der Netzwerkadressen (50) sämtlicher Netzwerkschnittstellen (40) der Kommunikationselemente, wobei das Übertragen das Senden, durch die Netzwerkschnittstelle (40) der Kopf-Netzwerkausrüstung (22, 24) und in Richtung wenigstens einer ersten Netzwerkausrüstung (22, 24), die unmittelbar mit der Kopf-Netzwerkausrüstung (22, 24) verbunden ist, des Netzwerkpräfixes der Netzwerkadresse der Netzwerkschnittstelle (40) der Kopf-Netzwerkausrüstung umfasst, wobei das Verfahren ferner die folgenden Schritte umfasst:
- Aushandeln (80) eines Netzwerkpräfixes der Netzwerkschnittstelle der ersten Netzwerkausrüstung (22, 24) ausgehend von dem empfangenen Netzwerkpräfix der Kopf-Netzwerkausrüstung,
- Broadcast-Übertragen (82) des Netzwerkpräfixes der Netzwerkschnittstelle der ersten Netzwerkausrüstung an die Kommunikationselemente (6, 8, 10, 22, 24), die unmittelbar mit der ersten Netzwerkausrüstung verbunden sind,
- wenn das Ziel-Kommunikationselement (6, 8, 10, 22, 24) eine Netzwerkausrüstung (22, 24) ist, werden die Schritte des Aushandelns (80) und des Broadcast-Übertragens (82) kaskadierend für jede Netzwerkausrüstung einer nachfolgenden Ebene in einer absteigenden Reihenfolge wiederholt.

2. Verfahren nach Anspruch 1, bei dem die Netzwerkadresse jeder Netzwerkschnittstelle (40) eine Mehrzahl von Adressierungsfeldern (52, 54, 56, 58) umfasst, wobei jedes Adressierungsfeld der Netzwerkadresse einer Netzwerkschnittstelle sich auf wenigstens eine Hierarchieebene des Kommunikationsnetzwerks bezieht, und bei dem der Schritt des Aushandelns (72, 80) die folgenden Schritte umfasst:
- Generieren einer ersten Kennung (SID, SSID),
- Bilden eines Netzwerkpräfixes durch Zuweisung der ersten Kennung an ein erstes Adressierungsfeld (54, 56) der Netzwerkadresse (50),
- Verifizieren der Einmaligkeit, in dem konfigurierten Kommunikationsnetzwerk (14), des mit der ersten generierten Kennung gebildeten Netzwerkpräfixes,
und, im Falle einer Negativverifizierung, Wiederholen der Schritte des Generierens einer ersten Kennung (SID, SSID), Bildens eines Netzwerkpräfixes und Verifizierens der Einmaligkeit des Netzwerkpräfixes.

3. Verfahren nach Anspruch 2, bei dem das Kommunikationsnetzwerk (14) ein Hauptnetzwerk (B) umfasst, wobei die Kopf-Netzwerkausrüstung (22, 24) mit dem Hauptnetzwerk (B) verbunden ist und bei dem der Schritt des Aushandelns einen Schritt des Erhaltens (70) einer zweiten Kennung (GRP), die dem Hauptnetzwerk zugeordnet ist, und Zuweisens der zweiten Kennung an ein zweites Adressierungsfeld (52) der Netzwerkadresse (50) umfasst.

4. Verfahren nach Anspruch 2, bei dem das Kommunikationsnetzwerk (14) ein Hauptnetzwerk (B) und wenigstens ein Teilnetzwerk (SN) umfasst, das mit dem Hauptnetzwerk (B) mittels einer Netzwerkausrüstung (22, 24) verbunden ist, und bei dem die Kopf-Netzwerkausrüstung (22, 24) mit dem Teilnetzwerk (SN) verbunden ist und
bei dem der Schritt des Aushandelns einen Schritt des Erhaltens (70, 78) einer zweiten Kennung (SID), die dem Teilnetzwerk (SN) zugeordnet ist, und Zuweisens der zweiten Kennung an ein zweites Adressierungsfeld (54) der Netzwerkadresse (50) umfasst.

5. Verfahren nach Anspruch 2, bei dem das Kommunikationsnetzwerk (14) ein Hauptnetzwerk (B), wenigstens ein Teilnetzwerk (SN), das mit dem Hauptnetzwerk (B) mittels einer ersten Netzwerkausrüstung (22, 24) verbunden ist, und wenigstens ein Teil-Teilnetzwerk (SSN), das mit dem Teilnetzwerk (SN) mittels einer zweiten Netzwerkausrüstung (22, 24) verbunden ist, umfasst und bei dem die Kopf-Netzwerkausrüstung (22, 24) mit einem so genannten dem Teil-Teilnetzwerk (SSN) verbunden ist und
bei dem der Schritt des Aushandelns einen Schritt des Erhaltens einer zweiten Kennung (SSID), die dem Teil-Teilnetzwerk (SN) zugeordnet ist, und des Zuweisens der zweiten Kennung an ein zweites Adressierungsfeld (56) der Netzwerkadresse (50) umfasst.

6. Verfahren nach einem der vorhergehenden Ansprüche, bei dem eine Schnittstellenkennung (IID) der Netzwerkschnittstelle (40) der Kopf-Netzwerkausrüstung (22, 24) zugeordnet wurde und
bei dem das Verfahren zur automatischen Konfiguration der Netzwerkadresse der Kopf-Netzwerkausrüstung (22, 24) ferner einen Schritt des Zuweisens der Schnittstellenkennung (IID) der Netzwerkschnittstelle der Kopf-Netzwerkausrüstung an ein drittes Adressierungsfeld (58) der Netzwerkadresse (50) umfasst.

7. Verfahren nach einem der Ansprüche 1 bis 6, bei dem das Netzwerkpräfix der Netzwerkschnittstelle (40) der Kopf-Netzwerkausrüstung in einer Broadcast-Nachricht übertragen wird und bei dem das Aushandeln (76, 78, 80) eines Netzwerkpräfixes der Netzwerkschnittstelle der ersten Netzwerkausrüstung die folgenden Schritte umfasst:
- Empfangen (76) des Netzwerkpräfixes der Netzwerkausrüstung durch die Netzwerkschnittstelle (40) der ersten Netzwerkausrüstung (22, 24),
- Generieren des Netzwerkpräfixes der Netzwerkschnittstelle der ersten Netzwerkausrüstung (22, 24) ausgehend von dem empfangenen Netzwerkpräfix.

8. Verfahren nach dem vorhergehenden Anspruch, bei dem der Schritt des Aushandelns (78, 80) des Netzwerkpräfixes ferner die folgenden Schritte umfasst:
- Generieren einer Kennung (SSID), die einem Teil-Teilnetzwerk (SSN) zugeordnet ist,
- Verifizieren der Einmaligkeit, in dem Kommunikationsnetzwerk (14), des mit dem empfangenen Netzwerkpräfix und der generierten Kennung (SSID) gebildeten Netzwerkpräfixes,
im Falle einer Negativverifizierung, die Schritte des Generierens der Kennung und des Verifizierens wiederholt werden.

9. Verfahren nach einem der vorhergehenden Ansprüche, bei dem der Schritt des Übertragens des Netzwerkpräfixes das Senden einer Broadcast-Nachricht durch die Netzwerkschnittstelle (40) der Netzwerkausrüstung (22, 24) in Richtung wenigstens einer Hausautomationsausrüstung (6, 8, 10), die unmittelbar mit der Netzwerkausrüstung (22, 24) verbunden ist, umfasst, wobei eine Schnittstellenkennung (IID) der Netzwerkschnittstelle der Hausautomationsausrüstung zugeordnet wurde, wobei die Broadcast-Nachricht das Netzwerkpräfix der Kopf-Netzwerkausrüstung umfasst,
wobei das Verfahren die folgenden Schritte umfasst:
- Empfangen (84) des Netzwerkpräfixes der Netzwerkschnittstelle (40) der Hausautomationsausrüstung (6, 8, 10),
- Extrahieren (86) von Adressierungsfeldern (52, 54, 56) aus dem Netzwerkpräfix,
- Zuweisen einer Netzwerkadresse an die Netzwerkschnittstelle der Hausautomationsausrüstung (6, 8, 10) ausgehend von extrahierten Adressierungsfeldern (52, 54, 56) und von der Schnittstellenkennung (IID) der Hausautomationsausrüstung.

10. Netzwerkschnittstelle (40) für Kommunikationselement (6, 8, 10, 22, 24), das Teil eines Heimautomationssystems für ein Gebäude ist, **dadurch gekennzeichnet, dass** sie einen Netzwerkcontroller (42) umfasst, der für das Ausführen des Verfahrens zur automatischen Konfiguration nach einem der vorhergehenden Ansprüche eingerichtet ist.

11. Netzwerkschnittstelle (40) nach dem vorhergehenden Anspruch, umfassend einen Speicher (44), der für das Speichern der Netzwerkadresse (50) der Netzwerkschnittstelle (40) eingerichtet ist, wobei die Netzwerkadresse in eine Mehrzahl von Adressierungsfeldern (52, 54, 56, 58) gestückelt ist, wobei jedes Adressierungsfeld unterschiedlichen und aufeinander folgenden Hierarchieebenen des Kommunikationsnetzwerks (14) entspricht.

12. Netzwerkschnittstelle (40) nach dem vorhergehenden Anspruch, wobei die Netzwerkadresse ein Adressierungsfeld (56) umfasst, das einer Teil-Teilnetzwerk-Kennung (SSID) des Kommunikationsnetzwerks entspricht und in eine Mehrzahl von Teil-Adressierungsfeldern unterteilt ist, wobei jedes Teil-Adressierungsfeld unterschiedlichen und aufeinander folgenden Hierarchieebenen des Teil-Teilnetzwerks (SSN) entspricht.

13. Kommunikationselement (6, 8, 10, 22, 24), das Teil eines Heimautomationssystems für ein Gebäude ist, **dadurch gekennzeichnet, dass** es eine Netzwerkschnittstelle nach einem Ansprüche 10 bis 12 umfasst.

14. Heimautomationssystem für ein Gebäude, **dadurch gekennzeichnet, dass** das System ein Kommunikationsnetzwerk (14), das in Form eines hierarchischen Netzwerks vorgesehen ist, und eine Mehrzahl von Kommunikationselementen (6, 8, 10, 22, 24) nach dem vorhergehenden Anspruch umfasst, die mit dem Kommunikationsnetzwerk (14) verbunden sind.

## Claims

1. A method for automatically configuring a network address (50) of network interfaces (40) of communicating elements (6, 8, 10, 22, 24) which are intended to form part of a home automation system (4) for a building (2) and belonging to an unconfigured network part,
the unconfigured network part including a head network equipment item (22, 24) and at least one communicating element (6, 8, 10, 22, 24),
the network address (50) of each network interface (40) including a network prefix,
the method being implemented subsequent to the connection of the head network equipment item (22, 24) to a configured communication network (14) belonging to the home automation system (4) for a building (2), the communication network (14) being arranged in the form of a hierarchical network including at least two successive hierarchy levels, the method comprising the steps of:
- negotiating (72, 80) the network prefix of the network interface (40) of the head network equipment item (22, 24),
- propagating (74, 82) said network prefix to the communicating elements (6, 8, 10, 22, 24) belonging to the network part with a view to the automatic configuration of the network addresses (50) of the set of network interfaces (40) of said communicating elements, the propagating of the network prefix comprises the sending, by the network interface (40) of the head network equipment item (22, 24) and to at least one first network equipment item (22, 24) directly connected to the head network equipment item (22, 24), of the network prefix of the network address of the network interface (40) of the head network equipment item, and
the method including steps for:
- negotiating (80) a network prefix of the network interface of the first network equipment item (22, 24) from the network prefix received from the head network equipment item,
- advertising (82) the network prefix of the network interface of the first network equipment item, to communicating elements (6, 8, 10, 22, 24) directly connected to the first network equipment item,
- if the recipient communicating element (6, 8, 10, 22, 24) is a network equipment item (22, 24), the steps for negotiating (78, 80) and advertising (82) are repeated in a cascade for each network equipment item of successive hierarchy level, in a descending order.

2. The method according to claim 1, wherein the network address of each network interface (40) includes a plurality of address fields (52, 54, 56, 58), each of the address fields of the network address of a network interface relating to at least one hierarchy level of the communication network, and the negotiating step (72, 80) comprises the steps of:
- generating a first identifier (SID, SSID),
- forming a network prefix by assigning the first identifier to a first address field (54, 56) of the network address (50),
- verifying uniqueness, in the configured communication network (14), of said network prefix formed with the first generated identifier,
and in case of negative verification, repeating the steps for generating a first identifier (SID, SSID), forming a network prefix and verifying uniqueness of the network prefix.

3. The method according to claim 2, wherein the communication network (14) includes a main network (B), the head network equipment item (22, 24) being connected to the main network (B), the negotiating step comprises a step for obtaining (70) a second identifier (GRP) associated with the main network and assigning the second identifier to a second address field (52) of the network address (50).

4. The method according to claim 2, wherein the communication network (14) includes a main network (B) and at least one subnetwork (SN) connected to the main network (B) by means of a network equipment item (22, 24) and wherein the head network equipment item (22, 24) is connected to said subnetwork (SN), and
wherein the negotiating step comprises a step for obtaining (70, 78) a second identifier (SID) associated with the subnetwork (SN) and assigning the second identifier to a second address field (54) of the network address (50).

5. The method according to claim 2, wherein the communication network (14) includes a main network (B), at least one subnetwork (SN) connected to the main network (B) by means of a first network equipment item (22, 24) and at least one sub-subnetwork (SSN) connected to the subnetwork (SN) by means of a second network equipment item (22, 24), and wherein the head network equipment item (22, 24) is connected to one said sub-subnetwork (SSN), and
wherein the negotiating step comprises a step for obtaining a second identifier (SSID) associated with the sub-subnetwork (SN) and assigning the second identifier to a second addressing field (56) of the network address (50).

6. The method according to any one of the preceding claims, wherein an interface identifier (IID) has been assigned to the network interface (40) of the head network equipment item (22, 24), and
wherein the automatic network address configuration method of the head network equipment item (22, 24) further comprises a step for assigning the interface identifier (IID) of the network interface of the head equipment item to a third address field (58) of the network address (50).

7. The method according to any of claims 1 to 6, wherein the network prefix of the network interface (40) of the head network equipment item is transmitted in a broadcast message, and the negotiation (76,78, 80) of a network prefix of the network interface of the first network equipment item comprises steps for:
- receiving (76) the network prefix of the head network equipment item by the network interface (40) of the first network equipment item (22, 24),
- generating the network prefix of the network interface of the first network equipment item (22, 24) from the received network prefix.

8. The method according to the preceding claim, wherein the step for negotiating (78, 80) the network prefix further comprises steps for:
- generating an identifier (SSID) associated with a sub-subnetwork (SSN),
- verifying the uniqueness, in the communication network (14), of the network prefix formed with the received network prefix and the generated identifier (SSID),
in case of negative verification, the identifier generating and verification steps being repeated.

9. The method according to any one of the preceding claims, wherein the propagation step of the network prefix comprises the emission of a broadcast message by the network interface (40) of the network equipment item (22, 24) to at least one home automation equipment item (6, 8, 10) directly connected to the network equipment item (22, 24), an interface identifier (IID) having been assigned to the network interface of the home automation equipment item, the broadcast message including the network prefix of the head network equipment item,
the method comprising steps for:
- reception (84) of the network prefix by the network interface (40) of the home automation equipment item (6, 8, 10),
- extraction (86) of address fields of (52, 54, 56) the network prefix,
- assignment of a network address to the network interface of the home automation equipment item (6, 8, 10) from extracted address fields (52, 54, 56) and the interface identifier (IID) of the home automation equipment item.

10. A network interface (40) for a communicating element (6, 8, 10, 22, 24) belonging to a home automation system for a building, **characterized in that** it includes a network controller (42) configured to carry out the method for automatically configuring a network address according to any one of the preceding claims.

11. The network interface (40) according to the preceding claim including a memory (44) configured to save the network address (50) of the network interface (40), wherein the network address is divided into a plurality of address fields (52, 54, 56, 58), each address field corresponding to different and successive hierarchy levels of the communication network (14).

12. The network interface (40) according to the preceding claim, wherein the network address includes an address field (56) corresponding to a sub-subnetwork identifier (SSID) of the communication network, divided into a plurality of address subfields, each address subfields corresponding to different and successive hierarchy levels of said subnetwork (SSN).

13. A communicating element (6, 8, 10, 22, 24) belonging to a home automation system for a building, **characterized in that** it includes a network interface according to one of claims 10 to 12.

14. A home automation system for a building, **characterized in that** the system includes a communication network (14) arranged in the form of a hierarchical network and a plurality of communicating equipment items (6, 8, 10, 22, 24) according to the preceding claim, connected to the communication network (14).
